# EUROPEAN PATENT APPLICATION

(11) **EP 4 564 938 A1**
(43) Date of publication of application: **04.06.2025**
(21) Application number: 23922537.8
(22) Date of filing: 27.12.2023
(51) Int. Cl.: H04W 52/02

(54) **METHOD FOR STARTING POWER-FREE PAYMENT, AND ELECTRONIC DEVICE**

(30) Priority: 17.02.2023 CN 202310172059
(71) Applicant: Huawei Technologies Co., Ltd., Shenzhen, Guangdong 518129 (CN)
(72) Inventor: LI, Xichen, Shenzhen, Guangdong 518129 (CN); HU, Jun, Shenzhen, Guangdong 518129 (CN); FANG, Yun, Shenzhen, Guangdong 518129 (CN); FENG, Jiashu, Shenzhen, Guangdong 518129 (CN); LUO, Pengtao, Shenzhen, Guangdong 518129 (CN); GU, Xingquan, Shenzhen, Guangdong 518129 (CN)
(74) Representative: Pfenning, Meinig & Partner mbB
(86) International application number: PCT/CN2023/142430
(87) International publication number: WO 2024/169422

(57) **Abstract**

This application discloses a method for enabling power-off payment and an electronic device. In the method, the electronic device detects a shutdown signal, and enables a power-off payment service (S601); and executes a shutdown operation when execution of an initialization operation on the power-off payment service is not completed and initialization duration is greater than a first duration threshold (S602), to reduce power consumption and shorten a shutdown time.

## Description

### CROSS-REFERENCE TO RELATED APPLICATIONS

This application claims priority to Chinese Patent Application No. 202310172059.8, filed with the China National Intellectual Property Administration on February 17, 2023 and entitled "METHOD FOR ENABLING POWER-OFF PAYMENT AND ELECTRONIC DEVICE", which is incorporated herein by reference in its entirety.

### TECHNICAL FIELD

This application relates to the field of electronic device technologies, and in particular, to a method for enabling a power-off payment and an electronic device.

### BACKGROUND

With the rise of mobile payment, people are gradually accustomed to using electronic payment instead of cash payment. Currently, to ensure that people can still use electronic payment when electronic devices are shut down, major manufacturers successively have launched their power-off payment services, such as completing electronic payment via near field communication (near field communication, NFC) when electronic devices are shut down. However, if the power-off payment service is enabled when the electronic device runs normally, that is, the power-off payment service always resides in a background, consequently the electronic device generates additional power consumption. It can be learned that an existing method for enabling power-off payment has a problem of high power consumption.

### SUMMARY

Embodiments of this application provide a method for enabling power-off payment and an electronic device, to reduce power consumption and shorten a shutdown time.

According to a first aspect, a method for enabling power-off payment is provided, where the method is applicable to an electronic device. The method includes: The electronic device may detect a shutdown signal, and enable a power-off payment service; and the electronic device may execute a shutdown operation when execution of an initialization operation on the power-off payment service is not completed and initialization duration is greater than a first duration threshold.

In the method, the electronic device may enable the power-off payment service when detecting the shutdown signal, to avoid that the power-off payment service always resides in a background because the electronic device enables the power-off payment service before shutdown, thereby reducing power consumption of the electronic device. After enabling the power-off payment service, the electronic device may further determine whether the execution of the initialization operation on the power-off payment service is completed and whether the initialization duration is greater than the first duration threshold. The electronic device executes the shutdown operation when the execution of the initialization operation on the power-off payment service is not completed and the initialization duration is greater than the first duration threshold. This avoids a long shutdown time of the electronic device caused by continuously waiting for the execution of the initialization operation on the power-off payment service to be completed, thereby shortening a shutdown time of the electronic device.

In a possible design, the electronic device may execute the shutdown operation when the execution of the initialization operation on the power-off payment service is not completed, the initialization duration is greater than the first duration threshold, and execution of a shutdown preparation operation is completed.

In the method, the electronic device may execute the shutdown operation when the execution of the shutdown preparation operation is completed, the execution of the initialization operation on the power-off payment service is not completed, and the initialization duration is greater than the first duration threshold. This avoids a long shutdown time of the electronic device caused by continuously waiting for the execution of the initialization operation on the power-off payment service to be completed, thereby shortening a shutdown time of the electronic device.

In a possible design, when the execution of the initialization operation on the power-off payment service is not completed, the initialization duration is less than or equal to the first duration threshold, and the execution of the shutdown preparation operation is completed, the shutdown operation is executed after waiting for the initialization duration to be greater than the first duration threshold.

In the method, when the execution of the shutdown preparation operation is completed, the execution of the initialization operation on the power-off payment service is not completed, and the initialization duration is less than or equal to the first duration threshold, the electronic device may execute the shutdown operation after waiting for the initialization duration to be greater than the first duration threshold. This avoids a long shutdown time of the electronic device caused by continuously waiting for the execution of the initialization operation on the power-off payment service to be completed, thereby shortening a shutdown time of the electronic device.

In a possible design, when the execution of the initialization operation on the power-off payment service is not completed, the initialization duration is less than or equal to the first duration threshold, and the execution of the shutdown preparation operation is completed, the electronic device may execute the shutdown operation after waiting for the execution of the initialization operation on the power-off payment service to be completed.

In the method, when the execution of the shutdown preparation operation is completed, the execution of the initialization operation on the power-off payment service is not completed, and the initialization duration is less than or equal to the first duration threshold, the electronic device may execute the shutdown operation after waiting for the execution of the shutdown preparation operation on the power-off payment service to be completed. This ensures that the execution of the initialization operation on the power-off payment service is completed while posing little impact on a shutdown time of the electronic device.

In a possible design, when the execution of the initialization operation on the power-off payment service is not completed, the initialization duration is less than or equal to the first duration threshold, and the execution of the shutdown preparation operation is not completed, the electronic device may execute the shutdown operation after waiting for shutdown preparation duration to be greater than a second duration threshold.

In the method, when the execution of the shutdown preparation operation is not completed, the execution of the initialization operation on the power-off payment service is not completed, and the initialization duration is less than or equal to the first duration threshold, the electronic device may execute the shutdown operation after waiting for the shutdown preparation duration to be greater than the second duration threshold. This ensures that the execution of the initialization operation on the power-off payment service is completed while posing little impact on a shutdown time of the electronic device.

In a possible design, the shutdown preparation operation includes sending and receiving a shutdown broadcast by a shutdown service. The shutdown service completes the execution of the shutdown preparation operation when receiving the shutdown broadcast.

In the method, when the shutdown service receives the shutdown broadcast, the electronic device may determine that the shutdown service completes the execution of the shutdown preparation operation. Further, the electronic device may execute the shutdown operation based on whether the execution of the shutdown preparation operation by the shutdown service is completed, the shutdown preparation duration, whether the execution of the initialization operation on the power-off payment service is completed, and the initialization duration. This ensures that the execution of the initialization operation on the power-off payment service is completed while posing little impact on a shutdown time of the electronic device.

In a possible design, when detecting the shutdown signal, the electronic device may detect a first operation triggered by a user. The first operation indicates a shutdown.

In the method, the electronic device may detect the shutdown signal when the user actively shuts down the electronic device. In this way, for different shutdown scenarios, the electronic device may indicate a payment application having power-off payment permission to enable a power-off payment service in different power consumption modes, so as to reduce power consumption of the electronic device.

In a possible design, when enabling the power-off payment service, after detecting the first operation that is triggered by the user and that indicates the shutdown, the electronic device may send a first enable request to a payment application that is installed on the electronic device and that has power-off payment permission. The first enable request indicates the payment application to enable the power-off payment service in a non-low power consumption mode.

In the method, when the user actively shuts down the electronic device, the electronic device may indicate the payment application having the power-off payment permission to enable the power-off payment service in the non-low power consumption mode. In this way, for different shutdown scenarios, the electronic device may indicate the payment application having the power-off payment permission to enable the power-off payment service in different power consumption modes, so as to reduce power consumption of the electronic device.

In a possible design, when enabling the power-off payment service, after detecting the first operation that is triggered by the user and that indicates the shutdown, the electronic device may determine whether a state of charge of the electronic device is greater than a first state of charge threshold. When the state of charge of the electronic device is greater than the first state of charge threshold, the electronic device sends a first enable request to a payment application that is installed on the electronic device and that has power-off payment permission. The first enable request indicates the payment application to enable the power-off payment service in a non-low power consumption mode. When the state of charge of the electronic device is less than or equal to the first state of charge threshold, the electronic device sends a second enable request to the payment application. The second enable request indicates the payment application to enable the power-off payment service in a low power consumption mode.

In the method, the electronic device may determine a state of charge of the electronic device when the user actively shuts down the electronic device. When the state of charge of the electronic device is greater than the first state of charge threshold, the electronic device indicates the payment application having the power-off payment permission to enable the power-off payment service in the non-low power consumption mode. When the state of charge of the electronic device is less than or equal to the first state of charge threshold, the electronic device indicates the payment application having the power-off payment permission to enable the power-off payment service in the low power consumption mode. In this way, for different shutdown scenarios, the electronic device may indicate the payment application having the power-off payment permission to enable the power-off payment service in different power consumption modes, so as to reduce power consumption of the electronic device.

In a possible design, the first operation specifically indicates the electronic device to be shut down at a first moment, and the first moment is a current moment or a non-current moment.

In the method, the user may indicate the electronic device to be shut down immediately or at a scheduled time. In this way, for different shutdown scenarios, the electronic device may indicate a payment application having power-off payment permission to enable a power-off payment service in different power consumption modes, so as to reduce power consumption of the electronic device.

In a possible design, when detecting the shutdown signal, the electronic device may detect that a state of charge of the electronic device is less than or equal to a second state of charge threshold.

In the method, the electronic device may detect the shutdown signal when shutting down at a low state of charge. In this way, for different shutdown scenarios, the electronic device may indicate a payment application having power-off payment permission to enable a power-off payment service in different power consumption modes, so as to reduce power consumption of the electronic device.

In a possible design, when enabling the power-off payment service, the electronic device may send a second enable request to a payment application that is installed on the electronic device and that has power-off payment permission. The second enable request indicates the payment application to enable the power-off payment service in a low power consumption mode.

In the method, when shutting down at a low state of charge, the electronic device may indicate the payment application having the power-off payment permission to enable the power-off payment service in the low power consumption mode. In this way, for different shutdown scenarios, the electronic device may indicate the payment application having the power-off payment permission to enable the power-off payment service in different power consumption modes, so as to reduce power consumption of the electronic device.

In a possible design, before detecting the shutdown signal, the electronic device may enable a first function in response to a setting operation triggered by the user. The first function indicates to enable the power-off payment service when the shutdown signal is detected.

In a possible design, after detecting the shutdown signal, the electronic device may determine whether the first function is enabled. The power-off payment service is enabled when the first function is enabled.

In the method, before the electronic device detects the shutdown signal, the user may set the electronic device to enable the power-off payment service when the shutdown signal is detected, so that the power-off payment service can be enabled when the electronic device is shut down according to a requirement of the user, thereby reducing power consumption of the electronic device.

In a possible design, after detecting the shutdown signal, the electronic device may display prompt information on a display. The prompt information prompts the user whether to enable the power-off payment service. The electronic device may further enable the power-off payment service in response to a second operation triggered by the user. The second operation indicates to enable the power-off payment service.

In the method, after the electronic device detects the shutdown signal, based on the prompt information displayed by the electronic device on the display, the user may indicate the electronic device to enable the power-off payment service, so that the power-off payment service can be enabled when the electronic device is shut down according to a requirement of the user, thereby reducing power consumption of the electronic device.

In a possible design, after detecting the shutdown signal, the electronic device may display prompt information on a display. The prompt information prompts the user whether to enable the power-off payment service. The electronic device may not enable the power-off payment service in response to a third operation triggered by the user, and execute a shutdown preparation operation. The third operation indicates not to enable the power-off payment service.

In the method, after the electronic device detects the shutdown signal, based on the prompt information displayed by the electronic device on the display, the user may indicate the electronic device not to enable the power-off payment service and to directly execute the shutdown preparation operation, so that the power-off payment service can be enabled when the electronic device is shut down according to a requirement of the user, thereby reducing power consumption of the electronic device.

According to a second aspect, a method for enabling power-off payment is provided. The method is applicable to an electronic device. The method includes: The electronic device may detect a shutdown signal, and enable a power-off payment service; and when execution of an initialization operation on the power-off payment service is not completed, initialization duration is less than or equal to a first duration threshold, and execution of a shutdown preparation operation is completed, the electronic device may execute a shutdown operation after waiting for the execution of the initialization operation on the power-off payment service to be completed.

In the method, the electronic device may enable the power-off payment service when detecting the shutdown signal, to avoid that the power-off payment service always resides in a background because the electronic device enables the power-off payment service before shutdown, thereby reducing power consumption of the electronic device. After enabling the power-off payment service, the electronic device may further determine whether the execution of the initialization operation on the power-off payment service is completed and whether the initialization duration is greater than the first duration threshold. When the execution of the initialization operation on the power-off payment service is not completed, the initialization duration is less than or equal to the first duration threshold, and the execution of the shutdown preparation operation is completed, the electronic device executes the shutdown operation after waiting for the execution of the initialization operation on the power-off payment service to be completed. This ensures that the execution of the initialization operation on the power-off payment service is completed while posing little impact on a shutdown time of the electronic device.

According to a third aspect, a method for enabling power-off payment is provided. The method is applicable to an electronic device. The method includes: The electronic device may detect a shutdown signal, and enable a power-off payment service; and when execution of an initialization operation on the power-off payment service is not completed, initialization duration is less than or equal to a first duration threshold, and execution of a shutdown preparation operation is not completed, the electronic device may execute a shutdown operation after waiting for shutdown preparation duration to be greater than a second duration threshold.

In the method, the electronic device may enable the power-off payment service when detecting the shutdown signal, to avoid that the power-off payment service always resides in a background because the electronic device enables the power-off payment service before shutdown, thereby reducing power consumption of the electronic device. After enabling the power-off payment service, the electronic device may further determine whether the execution of the initialization operation on the power-off payment service is completed and whether the initialization duration is greater than the first duration threshold. When the execution of the initialization operation on the power-off payment service is not completed, the initialization duration is less than or equal to the first duration threshold, and the execution of the shutdown preparation operation is not completed, the electronic device executes the shutdown operation after waiting for the shutdown preparation duration to be greater than the second duration threshold. This ensures that the execution of the initialization operation on the power-off payment service is completed while posing little impact on a shutdown time of the electronic device.

According to a fourth aspect, a communication apparatus is provided. The communication apparatus may be an electronic device, or may be a chip or a chip system used in an electronic device. The communication apparatus includes a communication interface and a processor, and optionally, further includes a memory. The memory is configured to store a computer program, and the processor is coupled to the memory and the communication interface. When the processor reads the computer program or instructions, the communication apparatus is enabled to perform the method performed by the electronic device in the first aspect, the second aspect, or the third aspect.

According to a fifth aspect, a computer-readable storage medium is provided. The computer-readable storage medium is configured to store a computer program. When the computer program is run on a computer, the computer is enabled to perform the method according to the first aspect, the second aspect, or the third aspect.

According to a sixth aspect, a computer program product is provided, including a computer program. When the computer program is run on a computer, the computer is enabled to perform the method according to the first aspect, the second aspect, or the third aspect.

According to a seventh aspect, a graphical user interface on an electronic device is further provided. The electronic device includes a display, a memory, and a processor. The processor is configured to execute one or more computer programs stored in the memory. The graphical user interface includes a graphical user interface displayed when the electronic device performs the method according to the first aspect, the second aspect, or the third aspect.

According to an eighth aspect, a chip system is provided, including a processor and an interface. The processor is configured to invoke instructions from the interface and run the instructions, to enable the chip system to implement the method according to the first aspect, the second aspect, or the third aspect.

For beneficial effects of the fourth aspect to the eighth aspect, refer to the beneficial effect of the first aspect, the second aspect, or the third aspect. Details are not described again.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3(1) to FIG. 3(3) are a diagram of a setting interface of a payment application according to an embodiment of this application;
FIG. 4 is a diagram of a prompt interface according to an embodiment of this application;
FIG. 5 is a schematic flowchart of enabling a power-off payment service according to an embodiment of this application;
FIG. 6 is a schematic flowchart of a method for enabling power-off payment according to an embodiment of this application; and
FIG. 7 is a diagram of another hardware structure of an electronic device according to an embodiment of this application.

### DESCRIPTION OF EMBODIMENTS

The following describes some terms in embodiments of this application, to facilitate understanding of a person skilled in the art.
(1) At least one: In embodiments of this application, the at least one means one or more, and a plurality of means two or more. In addition, it should be understood that in the descriptions of this specification, terms as "first" and "second" are merely intended for purposes of description, and should not be understood as expressing or implying relative importance or a sequence. For example, a first object and a second object do not represent importance or a sequence of the first object and the second object, but are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a non-detachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

Reference to "an embodiment", "some embodiments", or the like described in this specification indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

(2) Near field communication (near field communication, NFC) technology: is a short-range wireless connection technology based on radio frequency identification (radio frequency identification, RFID). The NFC technology implements short-range communication between NFC terminals through radio frequency field sensing. Two NFC terminals can exchange information and content and implement a transaction in a fast, secure, and contactless manner by touching or approaching each other.

Working modes of the NFC terminal may be classified into three types. 1. Peer-to-peer (peer-to-peer, P2P) mode: This mode is specifically applied to scenarios such as business card sharing and web page sharing. 2. Card emulation (card emulation, CE) mode: This mode is specifically applied to identity verification or mobile payment scenarios in which a bank card, a bus pass, a membership card, a coupon, an identity card, or the like is used. For example, the NFC terminal is a mobile phone. When a card application provided by a financial institution such as a bank is installed on the mobile phone, the mobile phone may work in a card emulation working mode to complete electronic payment. In other words, the card application is downloaded and installed on the mobile phone, and the card application is bound to a physical card to implement card emulation of the mobile phone, to replace a conventional physical integrated circuit (integrated circuit, IC) card, and electronic payment is directly completed by using the mobile phone. 3. Reader/writer (reader/writer, R/W) mode: This mode is specifically applied to mobile payment or identity verification scenarios such as bank card point of sale (point of sale POS) terminals, bus card POS terminals, and tag reading/writing scenarios.

(3) Power-off payment service: is a payment service that completes electronic payment through an NFC technology when an electronic device is shut down. For example, the electronic device is a mobile phone. When a payment application (application, APP) is installed on the mobile phone, a user may log in to the mobile phone by using registered account information such as an account and a password to enable a power-off payment service of the payment application. When the mobile phone is shut down, the power-off payment service of the payment application is directly used to complete electronic payment.

The payment application may be a card application provided by a financial institution such as a bank. To implement the card emulation function, a card application and its personalized data need to be downloaded locally on the electronic device to simulate a card. For example, the payment application includes various bank card applications. The payment application may alternatively be an application with an online card binding function provided by a mobile phone manufacturer or a third-party payment service provider. An association record between an account of an application and a card that is bound to the application online is stored on a server, and a card application and its personalized data do not need to be downloaded locally on the electronic device to simulate the card. For example, the payment application includes WeChat Pay, Alipay, and the like. This is not limited in embodiments of this application.

As described in the Background, a power-off payment service may be enabled when an electronic device runs normally, that is, the power-off payment service always resides in a background, but causes additional power consumption generated by the electronic device.

Based on the foregoing problems, an embodiment of this application provides a method for enabling power-off payment, to reduce power consumption and shorten a shutdown time. In the method, an electronic device may enable a power-off payment service when detecting a shutdown signal, to avoid that the power-off payment service always resides in a background because the electronic device enables the power-off payment service before shutdown, thereby reducing power consumption of the electronic device. After enabling the power-off payment service, the electronic device may further determine whether execution of an initialization operation on the power-off payment service is completed and whether initialization duration is greater than a first duration threshold. The electronic device executes a shutdown operation when the execution of the initialization operation on the power-off payment service is not completed and the initialization duration is greater than the first duration threshold. This avoids a long shutdown time of the electronic device caused by continuously waiting for the execution of the initialization operation on the power-off payment service to be completed, thereby shortening a shutdown time of the electronic device.

It should be understood that the method for enabling power-off payment provided in embodiments of this application may be applied to any electronic device that supports an NFC technology. **In** embodiments of this application, an electronic device may be a portable device, such as a mobile phone, a tablet computer, a wearable device (for example, a watch, a band, a helmet, or an earphone) with a wireless communication function, a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart television or a smart speaker), a smart vehicle, a smart robot, a workshop device, a wireless terminal in self driving (Self Driving), a wireless terminal in remote medical surgery (Remote Medical Surgery), a wireless terminal in a smart grid (Smart Grid), a wireless terminal in transportation security (Transportation Safety), a wireless terminal in a smart city (Smart City), or a wireless terminal in a smart home (Smart Home), a flight device (for example, an intelligent robot, a hot balloon, an unmanned aerial vehicle, or an airplane), or the like. A specific type of the electronic device is not limited in embodiments of this application.

In embodiments of this application, the electronic device may support a plurality of applications, for example, one or more of the following applications: a travel application, a drawing application, a demonstration application, a word processing application, a game application, a phone application, a video player application, a music player application, an email application, a shopping application, an instant message receiving and sending application, a photo management application, a camera application, a browser application, a calendar application, a clock application, a payment application, and a health management application. There may be a plurality of instant message receiving and sending applications, for example, a short message application, a multimedia message application, various mailbox applications, WeChat, Tencent chat software (QQ), Line (Line), photo sharing (Instagram), or Ding Talk. A user can send information such as a text, a voice, an image, a video file, and other files to other contacts by using the instant message receiving and sending application. There may be a plurality of types of payment applications, for example, electronic wallet applications launched by different mobile phone manufacturers, a mobile banking client launched by a financial institution such as a bank, and a third-party payment application launched by a third-party payment service provider, such as WeChat Pay and Alipay.

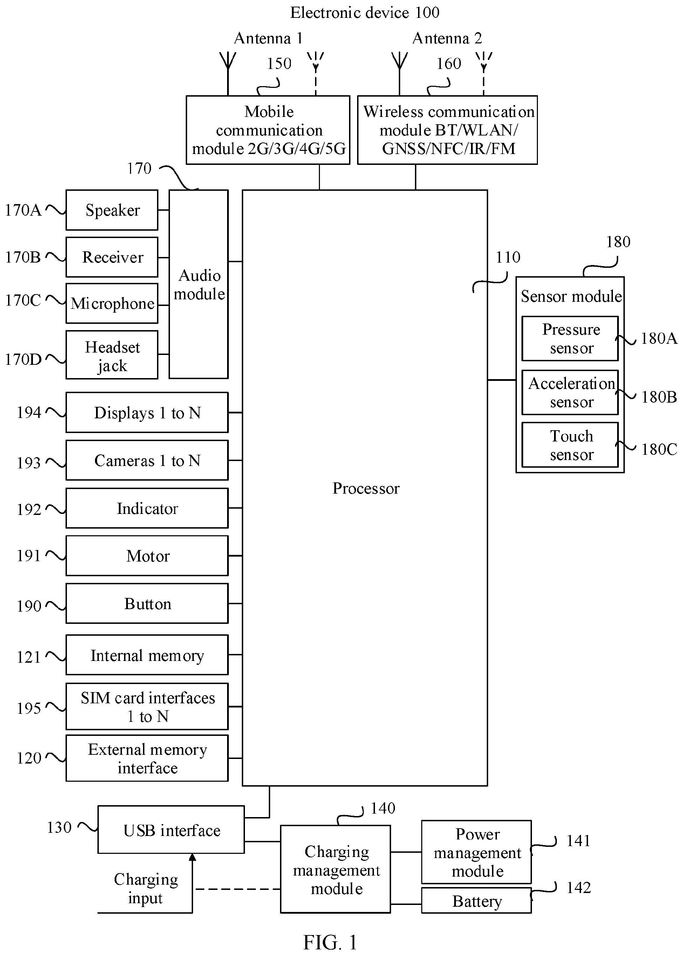

FIG. 1 is a diagram of a hardware structure of an electronic device according to an embodiment of this application. As shown in FIG. 1, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetch and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency. In this embodiment of this application, execution of a method for enabling power-off payment may be controlled by the processor 110 or completed by invoking another component. For example, the processor 110 invokes a processing program stored in the internal memory 121 in this embodiment of this application, or invokes, by using the external memory interface 120, a processing program stored in a third-party device in this embodiment of this application, so that when the electronic device is shut down, a power-off payment service is enabled in response to a first operation that is triggered by a user and that indicates to enable the power-off payment service, thereby preventing the power-off payment service from being always resident in a background and reducing power consumption. In addition, the electronic device executes a shutdown operation when execution of an initialization operation on the power-off payment service is not completed and initialization duration is greater than a first duration threshold, so as to avoid continuously waiting for the execution of the initialization operation on the power-off payment service to be completed, thereby shortening a shutdown time.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a photographed image or a recorded video) and the like generated during use of the electronic device 100. In addition, the internal memory 121 may include a high-speed random access memory, or may further include a nonvolatile memory, for example, at least one magnetic disk storage device, a flash memory, or a universal flash storage (universal flash storage, UFS).

The external memory interface 120 may be configured to connect to an external memory card, such as a micro SD card, to extend a storage capability of the electronic device. The external memory card communicates with the processor 110 through the external memory interface 120, to implement a data storage function. For example, files such as a picture or a video is stored in the external storage card.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. In this embodiment of this application, the power management module 141 may complete detection of a state of charge, so that the electronic device is shut down when detecting that the state of charge of the electronic device is less than or equal to a first state of charge threshold.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the wireless communication module 160 may complete an implementation of the power-off payment service, for example, completing electronic payment through an NFC technology when the electronic device is shut down.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, such as displaying a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The electronic device 100 may implement an audio function, for example, music playing or recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor 180C. The touch sensor may transfer the detected touch operation to the application processor to determine a type of a touch event. A visual output related to the touch operation may be provided on the display 194. In some other embodiments, the touch sensor may 180C may alternatively be disposed on a surface of the electronic device 100, and is at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100.

It may be understood that components shown in FIG. 1 do not constitute a specific limitation on the electronic device 100. The electronic device 100 may further include more or fewer components than those shown in the figure, or some components may be combined, or some components may be split, or there may be a different component layout. In addition, a combination/connection relationship between the components in FIG. 1 may also be adjusted and modified.

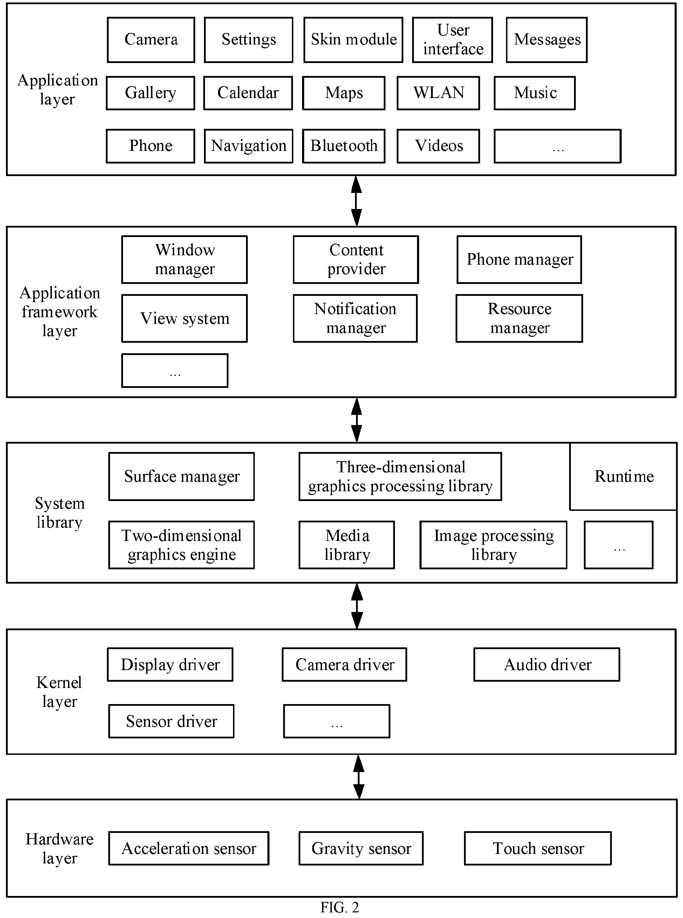

FIG. 2 is a diagram of a software structure of an electronic device according to an embodiment of this application. As shown in FIG. 2, the software structure of the electronic device may be a layered architecture. For example, software may be divided into several layers, and each layer has a clear role and responsibility. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 2, the application layer may include Camera, Settings, a skin module, a user interface (user interface, UI), a third-party application, and the like. The third-party application may include Gallery, Calendar, Phone, Maps, Navigation, WLAN, Bluetooth, Music, Videos, Messages, and the like.

The application framework layer provides an application programming interface (application programming interface, API) and a programming framework for an application at the application layer. The application framework layer may include some predefined functions. As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is given, the electronic device vibrates, or the indicator light blinks.

The runtime includes a kernel library and a virtual machine. The runtime is responsible for scheduling and management of an operating system.

The kernel library includes two parts: a function that needs to be called in Java language, and a kernel library of an operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D image layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various types of sensors, such as an acceleration sensor, a gravity sensor, and a touch sensor.

The following further describes, with reference to the hardware architecture of the electronic device shown in FIG. 1 and the software architecture of the electronic device shown in FIG. 2, a method for enabling power-off payment provided in this embodiment of this application.

An execution process of the method for enabling power-off payment provided in this embodiment of this application includes at least two stages: enabling a power-off payment service and initializing the power-off payment service. The following describes methods in the stages in detail.

### 1. Enabling a power-off payment service

In this embodiment of this application, a user may log in to a payment application that is installed on an electronic device and that has power-off payment permission. There may be a plurality of payment applications, for example, electronic wallet applications launched by different mobile phone manufacturers, a mobile banking client launched by a financial institution such as a bank, and a third-party payment application launched by a third-party payment service provider, such as WeChat Pay and Alipay. For example, the user may log in to the payment application by entering login information on a login interface of the payment application, or by triggering "one-click login through a mobile phone number".

When the user logs in to the payment application of the electronic device, the electronic device may display a setting interface of the payment application on a display before detecting a shutdown signal. The interface may display one or more setting options of a power-off payment service of the payment application, for example, setting options such as "Immediately enable" and "Enable upon shutdown". The "Immediately enable" indicates to immediately enable the power-off payment service, and the "Enable upon shutdown" indicates to enable the power-off payment service when the shutdown signal is detected. The user may select the "Enable upon shutdown" from the one or more setting options of the power-off payment service of the payment application. When a first electronic device detects an operation that the user selects the "Enable upon shutdown", in response to the operation, when detecting the shutdown signal, the electronic device may determine whether the "Enable upon shutdown" is set, and when the "Enable upon shutdown" is set, enable the power-off payment service, and execute a shutdown preparation operation. The shutdown preparation operation includes sending a shutdown broadcast by a shutdown service and receiving the shutdown broadcast by the shutdown service. In addition to the shutdown service, receivers of the shutdown broadcast may further include one or more applications installed on the electronic device, for example, a system application (for example, Settings) of the electronic device, or a third-party application (for example, WeChat Pay or Alipay). The receivers of the shutdown broadcast may sequentially receive the shutdown broadcast based on a priority sequence. For example, after the shutdown service sends the shutdown broadcast, a system application of the electronic device, a third-party application of the electronic device, and the shutdown service sequentially receive the shutdown broadcast. This avoids that the power-off payment service always resides in a background because the electronic device enables the power-off payment service before shutdown, and power consumption of the electronic device is reduced.

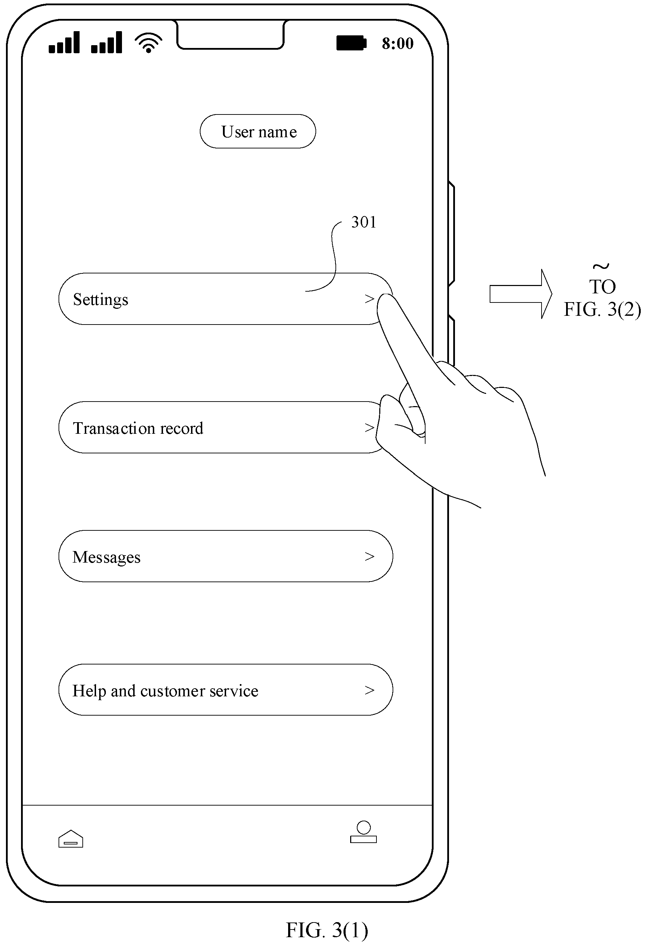

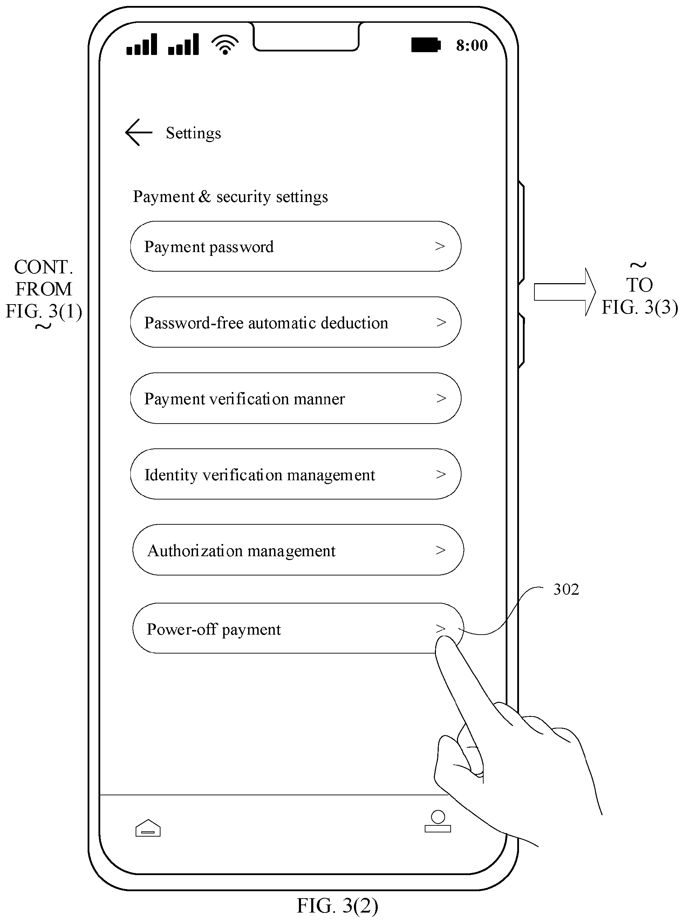

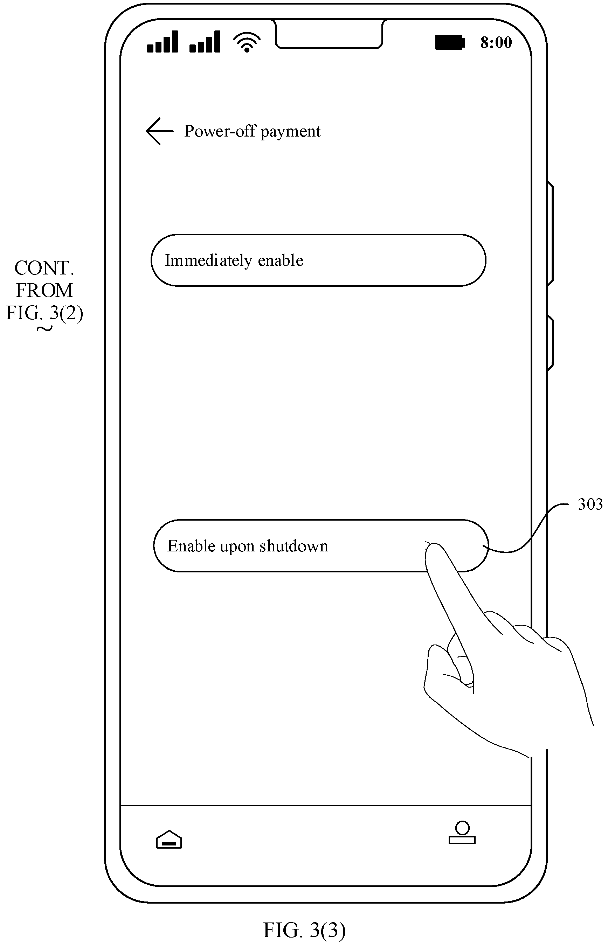

For example, when a user logs in to a payment application of an electronic device, before detecting a shutdown signal, the electronic device may display, on a display, a setting interface of the payment application shown in FIG. 3(1) to FIG. 3(3). As shown in FIG. 3(1), an icon 301 "Settings" may be displayed on the interface. The user may set one or more services of the payment application by selecting the icon 301 "Settings". When the electronic device detects an operation that the user selects the icon 301 "Settings", in response to the operation, the electronic device may display one or more to-be-set services on the display of the electronic device as shown in FIG. 3(2), for example, "Payment password", "Password-free automatic deduction", "Payment verification manner", "Identity verification management", "Authorization management", and "Power-off payment". The user may select the "Power-off payment" from the one or more to-be-set services displayed on the display of the electronic device. When the electronic device detects an operation that the user selects the icon 302 "Power-off payment", in response to the operation, the electronic device may display one or more to-be-set options of the power-off payment service on the display as shown in FIG. 3(3), for example, "Immediately enable" and "Enable upon shutdown". The user may select the "Enable upon shutdown" from the one or more to-be-set options of the power-off payment service displayed on the display of the electronic device. When a first electronic device detects an operation that the user selects the icon 303 "Enable upon shutdown", in response to the operation, when detecting the shutdown signal, the electronic device may determine whether the "Enable upon shutdown" is set, and when the "Enable upon shutdown" is set, enable the power-off payment service, and execute a shutdown preparation operation.

Alternatively, when a user logs in to a payment application of an electronic device, the electronic device may display prompt information on a display after detecting a shutdown signal. The prompt information prompts the user whether to enable a power-off payment service of the payment application. The user may select to enable or not enable the power-off payment service of the payment application. When the electronic device detects an operation that the user selects to enable the power-off payment service of the payment application, the electronic device may enable the power-off payment service and execute a shutdown preparation operation in response to the operation. When the electronic device detects an operation that the user selects not to enable the power-off payment service of the payment application, the electronic device may not enable the power-off payment service and execute a shutdown preparation operation in response to the operation. This avoids that the power-off payment service always resides in a background because the electronic device enables the power-off payment service before shutdown, and power consumption of the electronic device is reduced.

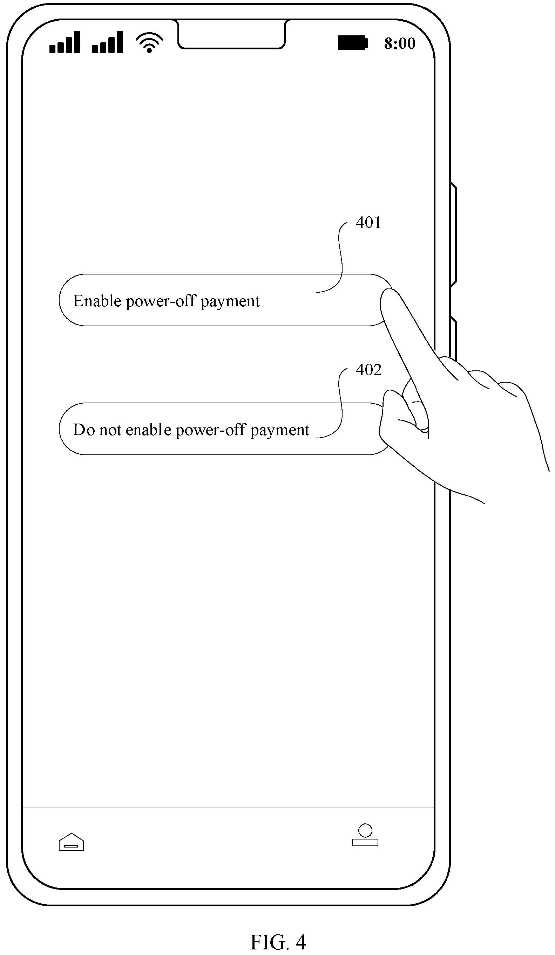

For example, when a user logs in to a payment application of an electronic device, after detecting a shutdown signal, the electronic device may display, on a display, a prompt interface shown in FIG. 4. As shown in FIG. 4, the interface may display an icon 401 "Enable power-off payment" and an icon 402 "Do not enable power-off payment". The user may enable a power-off payment service of the payment application by selecting the icon 401 "Enable power-off payment", or may not enable the power-off payment service of the payment application by selecting the icon 402 "Do not enable power-off payment". When the electronic device detects an operation that the user selects the icon 401 "Enable power-off payment", the electronic device may enable the power-off payment service of the payment application and execute a shutdown preparation operation in response to the operation. When the electronic device detects an operation that the user selects the icon 402 "Do not enable power-off payment", the electronic device may not enable the power-off payment service of the payment application and execute a shutdown preparation operation in response to the operation.

During specific implementation, the shutdown signal detected by the electronic device may be a signal detected by the electronic device in response to an operation that is triggered by the user and that indicates a shutdown. For example, the user may indicate the electronic device to be shut down at a first moment, where the first moment may be a current moment or a non-current moment, that is, the electronic device is shut down immediately or at a scheduled time in the future. For example, the user presses and holds a power button of the electronic device at the current moment to enable the electronic device to be shut down immediately, or the user indicates, through a voice, the electronic device to be shut down at the current moment immediately or at the scheduled time in the non-current moment. When the electronic device detects an operation that the user indicates the electronic device to be shut down at the first moment, in response to the operation, the electronic device may consider that the shutdown signal is detected.

When the electronic device enables a power-off payment service of a payment application, if a shutdown signal detected by the electronic device is a signal detected by the electronic device in response to an operation that is triggered by the user and that indicates a shutdown, power management of the electronic device may control a shutdown service to send a first enable request to the payment application, and control the shutdown service to send a shutdown broadcast. The first enable request indicates the payment application to enable the power-off payment service in a non-low power consumption mode. Alternatively, if a shutdown signal detected by the electronic device is a signal detected by the electronic device in response to an operation that is triggered by the user and that indicates a shutdown, power management of the electronic device may determine whether a state of charge of the electronic device is greater than a first state of charge threshold. When the state of charge of the electronic device is greater than the first state of charge threshold, the power management controls a shutdown service to send a first enable request to the payment application, and controls the shutdown service to send a shutdown broadcast. When the state of charge of the electronic device is less than or equal to the first state of charge threshold, the power management controls a shutdown service to send a second enable request to the payment application, and controls the shutdown service to send a shutdown broadcast. The second enable request indicates the payment application to enable the power-off payment service in a low power consumption mode. In this way, for different shutdown scenarios, the electronic device may indicate a payment application having power-off payment permission to enable a power-off payment service in different power consumption modes, so as to reduce power consumption of the electronic device.

Alternatively, the shutdown signal detected by the electronic device may be that the electronic device considers that a shutdown signal is detected when determining that a state of charge is less than or equal to a second state of charge threshold. For example, the second state of charge threshold may be 5 milliamperes. When the state of charge of the electronic device is less than or equal to 5 milliamperes, the electronic device may consider that the shutdown signal is detected.

When the electronic device enables the power-off payment service of the payment application, if the shutdown signal detected by the electronic device is the signal detected by the electronic device when the state of charge of the electronic device is less than or equal to the second state of charge threshold, power management of the electronic device may control a shutdown service to send a second enable request to the payment application, and control the shutdown service to send a shutdown broadcast. In this way, for different shutdown scenarios, the electronic device may indicate a payment application having power-off payment permission to enable a power-off payment service in different power consumption modes, so as to reduce power consumption of the electronic device.

### 2. Initializing the power-off payment service

In this embodiment of this application, after the electronic device enables the power-off payment service of the payment application, and controls the shutdown service to send the shutdown broadcast, the electronic device may determine whether execution of an initialization operation on the power-off payment service is completed. The electronic device may execute a shutdown operation if the execution of the initialization operation on the power-off payment service is not completed and initialization duration of the power-off payment service is greater than a first duration threshold. This avoids a long shutdown time of the electronic device caused by continuously waiting for the execution of the initialization operation on the power-off payment service to be completed, thereby shortening a shutdown time of the electronic device.

During specific implementation, after receiving the first enable request or the second enable request of the shutdown service of the power management of the electronic device, the payment application that is installed on the electronic device and that has the power-off payment permission may initialize the power-off payment service, and after the power-off payment service is initialized, send a first enable request response or a second enable request response to the shutdown service of the power management. The first enable request response indicates that the payment application has enabled the power-off payment service in the non-low power consumption mode. The second enable request response indicates that the payment application has enabled the power-off payment service in the low power consumption mode. Based on whether the shutdown service receives the first enable request response or the second enable request response, the power management may determine whether the execution of the initialization operation on the power-off payment service is completed. The power management may further determine the initialization duration of the power-off payment service based on duration between sending the first enable request and receiving the first enable request response by the shutdown service, or determine the initialization duration of the power-off payment service based on duration between sending the second enable request and receiving the second enable request response by the shutdown service. Based on whether the shutdown service receives the shutdown broadcast, the power management may further determine whether execution of a shutdown preparation operation by the shutdown service is completed. The power management may further determine shutdown preparation duration of the shutdown service based on duration between sending the shutdown broadcast and receiving the shutdown broadcast by the shutdown service.

If the execution of the initialization operation on the power-off payment service is not completed, the initialization duration of the power-off payment service is greater than the first duration threshold, and the execution of the shutdown preparation operation by the shutdown service is completed, the power management may control the shutdown service to execute the shutdown operation. **In** other words, if the execution of the initialization operation on the power-off payment service is not completed, the initialization duration of the power-off payment service is less than or equal to the first duration threshold, and the execution of the shutdown preparation operation by the shutdown service is completed, after waiting for the initialization duration of the power-off payment service to be greater than the first duration threshold, the power management may control the shutdown service to execute the shutdown operation.

If the execution of the initialization operation on the power-off payment service is not completed, the initialization duration of the power-off payment service is less than or equal to the first duration threshold, and the execution of the shutdown preparation operation by the shutdown service is completed, after waiting for the execution of the initialization operation on the power-off payment service to be completed, the power management may control the shutdown service to execute the shutdown operation.

If the execution of the initialization operation on the power-off payment service is not completed, the initialization duration of the power-off payment service is less than or equal to the first duration threshold, and the execution of the shutdown preparation operation by the shutdown service is not completed, after waiting for the shutdown preparation duration of the shutdown service to be greater than a second duration threshold, the power management may control the shutdown service to execute the shutdown operation.

For example, the first duration threshold may be 3 seconds, and the second duration threshold may be 10 seconds. When the power management determines that the execution of the initialization operation on the power-off payment service is not completed, the initialization duration of the power-off payment service is 1 second (that is, less than the first duration threshold), and the execution of the shutdown preparation operation by the shutdown service is completed, after waiting for the initialization duration of the power-off payment service to be greater than 3 seconds (that is, greater than the first duration threshold), the power management may control the shutdown service to execute the shutdown operation. For example, when the initialization duration of the power-off payment service is 3.1 seconds, and the execution of the initialization operation on the power-off payment service is still not completed, the power management may control the shutdown service to execute the shutdown operation at this time.

When the power management determines that the execution of the initialization operation on the power-off payment service is not completed, the initialization duration of the power-off payment service is 1 second (that is, less than the first duration threshold), and the execution of the shutdown preparation operation by the shutdown service is completed, after waiting for the execution of the initialization operation on the power-off payment service to be completed, the power management may control the shutdown service to execute the shutdown operation. For example, when the initialization duration of the power-off payment service is 2.5 seconds, and the execution of the initialization operation on the power-off payment service is completed, the power management may control the shutdown service to execute the shutdown operation at this time.

When the power management determines that the execution of the initialization operation on the power-off payment service is not completed, the initialization duration of the power-off payment service is 1 second (that is, less than the first duration threshold), and the execution of the shutdown preparation operation by the shutdown service is not completed, after waiting for the shutdown preparation duration of the shutdown service to be greater than 10 seconds (that is, greater than the second duration threshold), the power management may control the shutdown service to execute the shutdown operation. For example, when the shutdown preparation duration of the shutdown service is 10.1 seconds, and the execution of the shutdown preparation operation on the shutdown service is still not completed, the power management may control the shutdown service to execute the shutdown operation at this time.

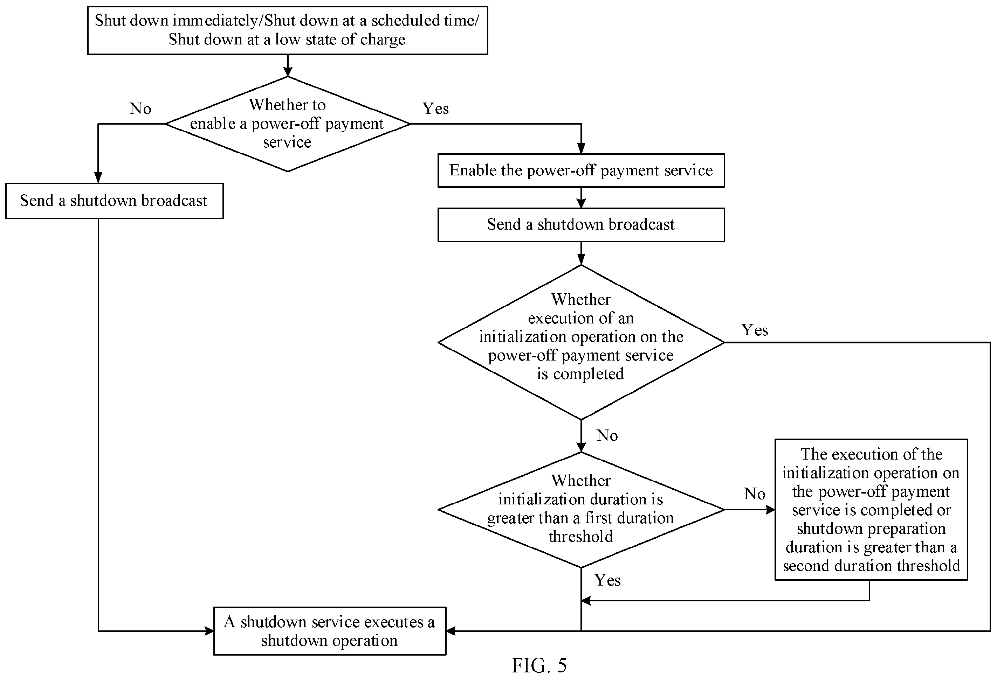

For example, FIG. 5 is a schematic flowchart of enabling a power-off payment service according to an embodiment of this application. As shown in FIG. 5, in response to an operation that a user indicates an electronic device to be shut down immediately at a current moment, or in response to an operation that a user indicates an electronic device to be shut down at a scheduled time in a non-current moment, or when an electronic device with a state of charge less than or equal to a second state of charge threshold shuts down at a low state of charge, the electronic device may display, on a display, prompt information that prompts the user whether to enable a power-off payment service of a payment application, or determine whether the power-off payment service is set to be enabled when the electronic device is shut down.

If the electronic device detects an operation that the user selects not to enable the power-off payment service of the payment application, in response to the operation, or the electronic device determines that the power-off payment service is not set to be enabled when the electronic device is shut down, the electronic device may not enable the power-off payment service. To be specific, the electronic device does not control a shutdown service to send a first enable request or a second enable request to the payment application, and controls the shutdown service to send a shutdown broadcast, so that a shutdown operation is executed when the shutdown service receives the shutdown broadcast.

If the electronic device detects an operation that the user selects to enable the power-off payment service of the payment application, in response to the operation, or the electronic device determines that the power-off payment service is set to be enabled when the electronic device is shut down, the electronic device may enable the power-off payment service. To be specific, the electronic device controls a shutdown service to send a first enable request or a second enable request to the payment application, and controls the shutdown service to send a shutdown broadcast. The electronic device may determine initialization duration of the power-off payment service and whether execution of an initialization operation on the power-off payment service is completed. If the execution of the initialization operation on the power-off payment service is not completed, the initialization duration is greater than a first duration threshold, and the shutdown service receives the shutdown broadcast, the electronic device may control the shutdown service to execute the shutdown operation. If the execution of the initialization operation on the power-off payment service is not completed, the initialization duration is less than or equal to a first duration threshold, and the shutdown service receives the shutdown broadcast, after waiting for the execution of the initialization operation on the power-off payment service to be completed, the electronic device may control the shutdown service to execute the shutdown operation. If the execution of the initialization operation on the power-off payment service is not completed, the initialization duration is less than or equal to a first duration threshold, and the shutdown service does not receive the shutdown broadcast, after waiting for shutdown preparation duration to be greater than a second duration threshold, the electronic device may control the shutdown service to execute the shutdown operation.

It can be learned that in this embodiment of this application, an electronic device may enable a power-off payment service when detecting a shutdown signal, to avoid that the power-off payment service always resides in a background because the electronic device enables the power-off payment service before shutdown, thereby reducing power consumption of the electronic device. After enabling the power-off payment service, the electronic device may further determine whether execution of an initialization operation on the power-off payment service is completed and whether initialization duration is greater than a first duration threshold. The electronic device executes a shutdown operation when the execution of the initialization operation on the power-off payment service is not completed and the initialization duration is greater than the first duration threshold. This avoids a long shutdown time of the electronic device caused by continuously waiting for the execution of the initialization operation on the power-off payment service to be completed, thereby shortening a shutdown time of the electronic device.

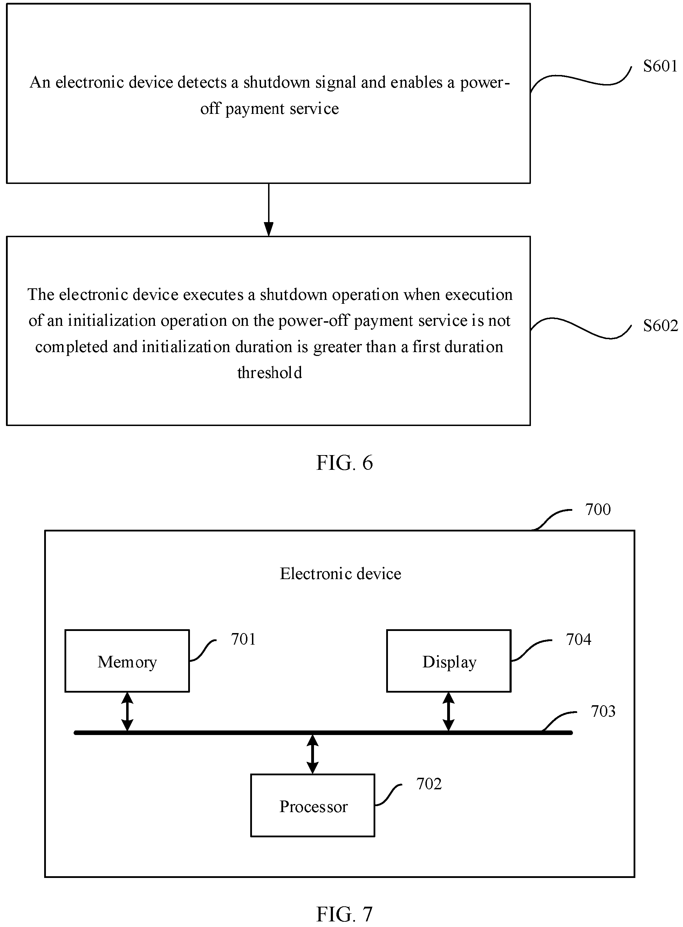

FIG. 6 is a schematic flowchart of a method for enabling power-off payment according to an embodiment of this application. As shown in FIG. 6, a procedure of the method may include the following steps.

S601: An electronic device detects a shutdown signal, and enables a power-off payment service.

For a manner in which the electronic device detects the shutdown signal and enables the power-off payment service, refer to descriptions in "1. Enabling a power-off payment service". Details are not described herein.

S602: The electronic device executes a shutdown operation when execution of an initialization operation on the power-off payment service is not completed and initialization duration is greater than a first duration threshold.

For a manner in which the electronic device executes the shutdown operation when the execution of the initialization operation on the power-off payment service is not completed and the initialization duration is greater than the first duration threshold, refer to descriptions in "2. Initializing the power-off payment service". Details are not described herein.

It should be noted that specific implementation procedures provided in the foregoing instances are merely examples of the method procedures applicable to embodiments of this application. An execution sequence of the steps may be correspondingly adjusted according to an actual requirement, or another step may be added, or some steps may be reduced.

Based on the foregoing embodiments and the same concept, an embodiment of this application further provides an electronic device. The electronic device is configured to implement the methods performed by the electronic devices that are provided in embodiments of this application.

As shown in FIG. 7, an electronic device 700 may include a memory 701, one or more processors 702, and one or more computer programs (not shown in the figure). The foregoing components may be coupled through one or more communication buses 703. Optionally, when the electronic device 700 is configured to implement the methods performed by the electronic devices that are provided in embodiments of this application, the electronic device 700 may further include a display 704.

The memory 701 stores one or more computer programs (code). The one or more computer programs include computer instructions. The one or more processors 702 invoke the computer instructions stored in the memory 701, so that the electronic device 700 performs the methods for enabling power-off payment provided in embodiments of this application. The display 704 is configured to display a related user interface such as an image, a video, or an application interface.

During specific implementation, the memory 701 may include a high-speed random access memory, or may include a nonvolatile memory such as one or more disk storage devices, a flash device, or another nonvolatile solid-state storage device. The memory 701 may store an operating system (briefly referred to as a system below), for example, an embedded operating system such as Android, iOS, Windows, or Linux. The memory 701 may be configured to store an implementation program of this embodiment of this application. The memory 701 may further store a network communication program. The network communication program may be used for communicating with one or more additional devices, one or more user equipments, or one or more network devices. The one or more processors 702 may be general-purpose central processing units (Central Processing Units, CPUs), microprocessors, application-specific integrated circuits (Application-Specific Integrated Circuits, ASICs), or one or more integrated circuits configured to control program execution of the solutions of this application.

It should be noted that FIG. 7 is merely an implementation of the electronic device 700 provided in this embodiment of this application. In actual application, the electronic device 700 may further include more or fewer components. This is not limited herein.

Based on the foregoing embodiments and the same concept, an embodiment of this application further provides a computer-readable storage medium. The computer-readable storage medium stores a computer program. When the computer program is run on a computer, the computer is enabled to perform the method performed by the electronic device in the methods that are provided in the foregoing embodiments.

Based on the foregoing embodiments and the same concept, an embodiment of this application further provides a computer program product. The computer program product includes a computer program or instructions. When the computer program or the instructions are run on a computer, the computer is enabled to perform the method performed by the electronic device in the methods that are provided in the foregoing embodiments.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A method for enabling power-off payment, applied to an electronic device, wherein the method comprises:
detecting a shutdown signal and enabling a power-off payment service; and
executing a shutdown operation when execution of an initialization operation on the power-off payment service is not completed and initialization duration is greater than a first duration threshold.

2. The method according to claim 1, wherein the executing a shutdown operation when execution of an initialization operation on the power-off payment service is not completed and initialization duration is greater than a first duration threshold comprises:
executing the shutdown operation when the execution of the initialization operation on the power-off payment service is not completed, the initialization duration is greater than the first duration threshold, and execution of a shutdown preparation operation is completed.

3. The method according to claim 2, wherein the executing the shutdown operation when the execution of the initialization operation on the power-off payment service is not completed, the initialization duration is greater than the first duration threshold, and execution of a shutdown preparation operation is completed comprises:
when the execution of the initialization operation on the power-off payment service is not completed, the initialization duration is less than or equal to the first duration threshold, and the execution of the shutdown preparation operation is completed, executing the shutdown operation after waiting for the initialization duration to be greater than the first duration threshold.

4. The method according to claim 1, wherein the method further comprises:
when the execution of the initialization operation on the power-off payment service is not completed, the initialization duration is less than or equal to the first duration threshold, and execution of a shutdown preparation operation is completed, executing the shutdown operation after waiting for the execution of the initialization operation on the power-off payment service to be completed.

5. The method according to claim 1, wherein the method further comprises:
when the execution of the initialization operation on the power-off payment service is not completed, the initialization duration is less than or equal to the first duration threshold, and execution of a shutdown preparation operation is not completed, executing the shutdown operation after waiting for shutdown preparation duration to be greater than a second duration threshold.

6. The method according to any one of claims 2 to 5, wherein the shutdown preparation operation comprises sending and receiving a shutdown broadcast by a shutdown service, and the shutdown service completes the execution of the shutdown preparation operation when receiving the shutdown broadcast.

7. The method according to any one of claims 1 to 6, wherein the detecting a shutdown signal comprises:
detecting a first operation triggered by a user, wherein the first operation indicates a shutdown.

8. The method according to claim 7, wherein the enabling a power-off payment service comprises:
sending a first enable request to a payment application that is installed on the electronic device and that has power-off payment permission, wherein the first enable request indicates the payment application to enable the power-off payment service in a non-low power consumption mode.

9. The method according to claim 7, wherein the enabling a power-off payment service comprises:
determining whether a state of charge of the electronic device is greater than a first state of charge threshold; and
when the state of charge of the electronic device is greater than the first state of charge threshold, sending a first enable request to a payment application that is installed on the electronic device and that has power-off payment permission, wherein the first enable request indicates the payment application to enable the power-off payment service in a non-low power consumption mode; or
when the state of charge of the electronic device is less than or equal to the first state of charge threshold, sending a second enable request to the payment application, wherein the second enable request indicates the payment application to enable the power-off payment service in a low power consumption mode.

10. The method according to any one of claims 7 to 9, wherein the first operation specifically indicates the electronic device to be shut down at a first moment, and the first moment is a current moment or a non-current moment.

11. The method according to any one of claims 1 to 6, wherein the detecting a shutdown signal comprises:
detecting that a state of charge of the electronic device is less than or equal to a second state of charge threshold.

12. The method according to claim 11, wherein the enabling a power-off payment service comprises:
sending a second enable request to a payment application that is installed on the electronic device and that has power-off payment permission, wherein the second enable request indicates the payment application to enable the power-off payment service in a low power consumption mode.

13. The method according to any one of claims 1 to 12, wherein before the detecting a shutdown signal, the method further comprises:
enabling a first function in response to a setting operation triggered by the user, wherein the first function indicates to enable the power-off payment service when the shutdown signal is detected.

14. The method according to claim 13, wherein the detecting a shutdown signal and enabling a power-off payment service comprises:
detecting the shutdown signal and determining whether the first function is enabled; and
enabling the power-off payment service when the first function is enabled.

15. The method according to any one of claims 1 to 12, wherein the detecting a shutdown signal and enabling a power-off payment service comprises:
detecting the shutdown signal and displaying prompt information on a display, wherein the prompt information prompts the user whether to enable the power-off payment service; and
enabling the power-off payment service in response to a second operation triggered by the user, wherein the second operation indicates to enable the power-off payment service.

16. The method according to claim 15, wherein the method further comprises:
skipping enabling the power-off payment service in response to a third operation triggered by the user, and executing the shutdown preparation operation, wherein the third operation indicates not to enable the power-off payment service.

17. A method for enabling power-off payment, applied to an electronic device, wherein the method comprises:
detecting a shutdown signal and enabling a power-off payment service; and
when execution of an initialization operation on the power-off payment service is not completed, initialization duration is less than or equal to a first duration threshold, and execution of a shutdown preparation operation is completed, executing a shutdown operation after waiting for the execution of the initialization operation on the power-off payment service to be completed.

18. A method for enabling power-off payment, applied to an electronic device, wherein the method comprises:
detecting a shutdown signal and enabling a power-off payment service; and
when execution of an initialization operation on the power-off payment service is not completed, initialization duration is less than or equal to a first duration threshold, and execution of a shutdown preparation operation is not completed, executing a shutdown operation after waiting for shutdown preparation duration to be greater than a second duration threshold.

19. An electronic device, wherein the electronic device comprises:
a processor, a memory, and one or more programs, wherein
the one or more programs are stored in the memory, the one or more programs comprise instructions, and when the instructions are executed by the processor, the electronic device is enabled to perform the method according to any one of claims 1 to 16, 17, or 18.

20. A computer-readable storage medium, wherein the computer-readable storage medium is configured to store a computer program, and when the computer program is run on a computer, the computer is enabled to perform the method according to any one of claims 1 to 16, 17, or 18.

21. A computer program product, comprising a computer program, wherein when the computer program is run on a computer, the computer is enabled to perform the method according to any one of claims 1 to 16, 17, or 18.
